# EUROPÄISCHE PATENTSCHRIFT

(11) **EP 4 241 960 B1**
(45) Veröffentlichungstag und Bekanntmachung des Hinweises auf die Patenterteilung: **21.01.2026**
(21) Anmeldenummer: 23159649.5
(22) Anmeldetag: 02.03.2023
(51) Int. Cl.: B29C 49/64, B29C 49/78

(54) **BETRIEBSVERFAHREN FÜR EINE HEIZVORRICHTUNG FÜR DIE TEMPERATURKONDITIONIERUNG VON VORFORMLINGEN IN EINER STARTUPPHASE, HEIZVORRICHTUNG UND MASCHINE**
OPERATING METHOD FOR A HEATING DEVICE FOR THE TEMPERATURE CONDITIONING OF PREFORMS IN A START-UP PHASE, HEATING DEVICE AND MACHINE
PROCÉDÉ DE FONCTIONNEMENT D'UN DISPOSITIF DE CHAUFFAGE POUR LE CONDITIONNEMENT THERMIQUE DE PRÉFORMES DANS UNE PHASE DE DÉMARRAGE, DISPOSITIF DE CHAUFFAGE ET MACHINE

(30) Priorität: 09.03.2022 DE 102022105519
(43) Veröffentlichungstag der Anmeldung: 13.09.2023
(73) Patentinhaber: KHS GmbH, 44143 Dortmund (DE)
(72) Erfinder: Ulutürk, Deniz, 22761 Hamburg (DE); Gerkens, André, 22926 Ahrensburg (DE)
(74) Vertreter: Eisenführ Speiser

(56) Entgegenhaltungen:
- EP-B1- 1 383 636
- WO-A1-2019/048419
- CN-B- 105 711 063
- US-A1- 2012 226 376
- US-A1- 2021 101 315

## Beschreibung

Die vorliegende Erfindung betrifft ein Verfahren zum Betreiben einer Heizvorrichtung für die Temperaturkonditionierung von Vorformlingen. Zudem betrifft die vorliegende Offenbarung eine Heizvorrichtung für die Temperaturkonditionierung von Vorformlingen und eine Maschine für die Herstellung von Behältern aus Vorformlingen mit einer Heizvorrichtung für die Temperaturkonditionierung der Vorformlinge.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformung hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d. h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in dem Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert.

Bei einem Formen der Behälter aus den Vorformlingen durch das Füllgut selbst, d. h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1.

Grundsätzlich ist bekannt, den Umformvorgang und/oder die Temperaturkonditionierung der Vorformlinge steuerungs- und/oder regelungstechnisch zu überwachen, z.B. aus der US 2012/226376 A1, der DE 10 2014 119 563.9, der EP 1 383 636 B1 oder der US 2021/0101315 A1.

Bezüglich der Temperaturkonditionierung der Vorformlinge sind die Anforderungen im Wesentlichen identisch unabhängig davon, ob in einem nachfolgenden Schritt die Umformung des mit einem geeigneten Temperaturprofil versehenen Vorformlings mittels Einleiten eines Gases unter Druck oder mittels einer Flüssigkeit unter Druck erfolgt. Die jeweils vorzusehende Heizvorrichtung zum thermischen Konditionieren der Vorformlinge und das jeweils anzuwendende Verfahren zum Betreiben einer solchen Heizvorrichtung sind also für die beiden bekannten Umformverfahren gleichartig.

Die nachfolgend beschriebene Erfindung betrifft die beiden geschilderten Umformverfahren gleichermaßen. Im Stand der Technik bekannte Heizvorrichtungen bestehen zum Beispiel aus mehreren sogenannten Heizkästen. Diese Heizkästen sind üblicherweise stationär entlang einer Heizstrecke angeordnet und durch diese Heizkästen werden Vorformlinge mittels geeigneter Transporteinrichtungen hindurchbewegt und dabei beheizt. Übliche Transporteinrichtungen bestehen zum Beispiel aus einer umlaufenden Transportkette. Die Kettenglieder werden dabei zum Beispiel von Transportdornen gebildet, von denen jeder durch klemmenden Eingriff in den Mündungsabschnitt eines Vorformlings einen Vorformling hält und auf seiner umlaufenden Bewegung entlang der Heizstrecke und durch die Heizkästen führt.

In der Regel ist die Heizvorrichtung modular aufgebaut, d. h. entlang der Heizstrecke sind mehrere solcher Heizkästen als Heizmodul angeordnet. Es kann sich dabei um jeweils gleiche Heizkästen handeln oder um Heizkästen unterschiedlicher Bauart.

Innerhalb der Heizkästen sind zum Beispiel Heizelemente angeordnet. Es werden im Stand der Technik bevorzugt Nahinfrarot-Strahler (NIR) als Heizelemente verwendet, zum Beispiel können in Längsrichtung eines Vorformlings mehrere Nahinfrarot-Strahler als Heizelemente übereinander angeordnet sein. Ein Beispiel für eine solche Heizvorrichtung und ein Beispiel für den typischen Aufbau eines vorstehend als Heizkasten bezeichneten Heizmoduls zeigt die EP 2 749 397 A1 oder auch die WO 2011/063784 A2.

Es ist im Stand der Technik bekannt, dass diese Heizvorrichtungen an eine Steuerungseinrichtung angeschlossen sind. Diese Steuerungseinrichtung ist dabei in der Regel so ausgelegt, dass die Vorformlinge innerhalb der Heizvorrichtung so erwärmt werden, dass sie die Heizvorrichtung mit einem gewünschten Temperaturprofil verlassen.

Darunter ist zu verstehen, dass sowohl eine bestimmte Temperatur im Vorformling realisiert ist als auch ein bestimmter Temperaturverlauf in Längsrichtung des Vorformlings und ggf. auch in Umfangsrichtung des Vorformlings. Es ist im Stand der Technik auch bekannt, dass zum Beispiel zusätzlich zu den vorstehend genannten Heizelementen auch Einrichtungen zur Kühlung der Oberfläche der Vorformlinge vorgesehen sein können, zum Beispiel Einrichtungen zum gezielten Beaufschlagen der Vorformlingsoberfläche mit einer kühlenden Luftströmung. Auch diese zusätzlichen Einrichtungen zur Kühlung können in die genannte Steuerungseinrichtung der Heizvorrichtung eingebunden sein. Der Begriff der Steuereinrichtung und des Steuerverfahrens umfasst Einrichtungen und Verfahren, mit denen eine Steuerung im Sinne des englischen Begriffes "open-loop control" ausgeführt wird, mit denen eine Regelung im Sinne des englischen Begriffes "closed-loop control" ausgeführt wird, und Mischformen davon.

Um die Heizvorrichtung steuerungstechnisch so regeln und/oder steuern zu können, dass am Ausgang der Heizvorrichtung die Vorformlinge in der gewünschten Weise temperaturkonditioniert vorliegen, also die gewünschte Temperatur und das gewünschte Temperaturprofil aufweisen, ist es im Stand der Technik bekannt, ausgangsseitig der Heizvorrichtung zum Beispiel einen Messsensor anzuordnen, z. B. ein Pyrometer, der die Oberflächentemperatur an dem Messsensor vorbeilaufender Vorformlinge misst. Der Führungswert der Regelung wäre bei einer solchen Ausführungsform die Oberflächentemperatur der Vorformlinge. Dieser Messwert kann zum Beispiel mit einem Sollwert verglichen werden und die Regelung der Heizvorrichtung kann also auf eine Regelung auf einen Sollwert für die Oberflächentemperatur der Vorformlinge eingestellt sein.

Bei bekannten Heizvorrichtungen ist teilweise vorgesehen, dass bezüglich in Längsrichtung der Vorformlinge übereinander angeordneter Heizelemente eine Unterscheidung vorgenommen wird. Es wird z. B. für die übereinander angeordneten Heizelemente jeweils eine eigene Heizleistung definiert, die von der Steuerungseinrichtung geregelt und/oder gesteuert wird. Es kann z.B. eine Voreinstellung in der Steuerungseinrichtung dahingehend erfolgen, z. B. durch eine Bedienperson, ob und in welcher Weise auf einem unterschiedlichen Höhenniveau angeordnete Heizelemente unterschiedlich heizen sollen. Die Steuerungseinrichtung kann dafür z. B. einen höhenspezifischen Parameter bereitstellen. Weiterhin ist bekannt, dass ein übergeordneter Leistungsparameter eingestellt wird, der für alle Heizelemente Anwendung findet. Die tatsächliche, von der Steuerungseinrichtung vorgegebene Heizleistung einer Strahlerebene, also aller auf einem gleichen Höhenniveau angeordneten Heizelemente, ergibt sich dann durch Multiplikation beider Parameter.

Durch die individuelle Einstellung der Heizleistung pro Heizelementebene ist ein bestimmtes Heizprofil einstellbar. So kann zum Beispiel die Heizleistung in jeder Ebene so eingestellt werden, dass bestimmte Bereiche des Vorformlings stärker beheizt werden. Gleichzeitig kann die Heizleistung insgesamt eingestellt werden über den für alle Heizelemente gemeinsamen, übergeordneten Leistungsparameter. Die Regelung der Heizvorrichtung erfolgt dabei im Stand der Technik dadurch, dass der übergeordnete Leistungsparameter in Abhängigkeit vom Pyrometermesswert nachgestellt wird. Der Pyrometermesswert stellt die Führungsgröße der Regelung dar, also z.B. die Oberflächentemperatur der Vorformlinge. Der höhenspezifische Parameter wird im Stand der Technik nicht geregelt, sondern ergibt sich aus dem gewünschten Temperaturprofil in Achsrichtung des Vorformlings. Er wird in der Regel beim Einrichten bzw. beim Einfahren der Maschine eingestellt und bedarfsweise von einer Bedienperson geändert, z.B. bei einer Produktionsumstellung auf andere Vorformlinge.

Die bekannten Heizvorrichtungen und die bekannten Steuerungseinrichtungen und Steuerverfahren für diese Heizvorrichtungen zeigen gute Ergebnisse, wenn die Heizvorrichtung ihre Gleichgewichtstemperatur im thermodynamisch stabilen Gleichgewichtszustand erreicht hat und im Dauerbetrieb und in diesem Zustand betrieben wird. Dieser thermodynamisch stabile Gleichgewichtszustand liegt vor, wenn nach einer gewissen Betriebsdauer, die die Heizvorrichtung bildenden Elemente wie Heizelemente, Reflektoren etc. eine Temperatur erreicht haben, dieser bei fortdauerndem Betrieb im Wesentlichen konstant bleibt. Ein solcher thermodynamisch stabiler Gleichgewichtszustand liegt hingegen noch nicht vor, wenn die Heizung in Betrieb genommen wird oder wenn die Heizung aus einem sogenannten Inline-Betrieb wieder in einen Produktionsbetrieb versetzt wird. Als "Inline-Betrieb" wird dabei ein Betriebszustand verstanden, in dem der reguläre Behälterherstellungsprozess und somit auch der reguläre Erwärmungsprozess unterbrochen ist, zum Beispiel aufgrund von Betriebsstörungen. Bei Betriebsstörungen wird in der Regel der Zulauf von Vorformlingen in die Heizvorrichtung unterbrochen und die Heizvorrichtung bei einem niedrigen Heizleistungswert weiterbetrieben. Erst bei länger andauernden Betriebsstörungen wird die Heizvorrichtung gänzlich ausgeschaltet. Heizvorrichtungen zeigen in solchen Startupphasen, also Betriebsphasen außerhalb des Dauerbetriebs, ein instationäres Abstrahl- und Aufheizverhalten. Dieses instationäre Verhalten resultiert im Wesentlichen aus zwei Effekten. Zum Startzeitpunkt der Heizvorrichtung sind die Bauelemente der Vorrichtung selber noch nicht auf ihrer endgültigen Betriebstemperatur angelangt. Deshalb liegen noch keine stabilen thermischen Verhältnisse vor. Die Wärmestrahlung, die auf die durch die Heizvorrichtung geführten Vorformlinge auftrifft, ist in der Startupphase bereits deshalb noch nicht in einem thermodynamischen Gleichgewicht, weil in der Heizvorrichtung angeordnete Reflektoren oder andere Bauteile noch nicht ihre Gleichgewichtstemperatur erreicht haben. Die Reflektoren oder andere Bauteile der Heizvorrichtung stellen aber Sekundärstrahler dar. Auch die Glaskolben der Strahler oder eventuell vorgesehene Filter haben gegebenenfalls noch nicht ihren Gleichgewichtszustand erreicht und es ergeben sich weitere Effekte auf die Strahlungsintensität, die auf die Vorformlinge einwirkt, zum Beispiel auch bezüglich des Wellenlängenspektrums der auf die Vorformlinge auftreffenden Strahlung.

Ein weiterer Aspekt ist, dass in der Startupphase der Heizvorrichtung zunächst keine Vorformlinge in die Heizvorrichtung einlaufen. Im Stand der Technik ist es üblich, Vorformlinge erst nach Erreichen einer bestimmten Heizvorrichtungstemperatur in die Heizvorrichtung einlaufen zu lassen. Mit dem Einlaufen der ersten Vorformlinge ändert sich das Verhältnis zwischen abstrahlenden und absorbierenden Flächen stetig.

In diesen Startupphasen der Heizvorrichtung werden also im Ergebnis die Vorformlinge unterschiedlich beheizt. Entsprechend weisen die aus den Vorformlingen hergestellten Behälter eine Streuung in ihren Eigenschaften auf.

Die in der Heizvorrichtung herrschende Temperatur wird im Stand der Technik zum Beispiel durch Temperatursensoren gemessen, die zum Beispiel in einem Reflektor der Heizvorrichtung angeordnet sein können. Eine solche Temperaturmessung kann zum Beispiel verwendet werden zur Feststellung, ob die Heizvorrichtung eine bestimmte Solltemperatur erreicht hat, ab der das Einlaufen der Vorformlinge in die Heizvorrichtung gestartet wird. Es ist auch möglich, mehrerer solcher Temperatursensoren vorzusehen.

Während also beim Betrieb bekannter Heizvorrichtungen im Dauerbetrieb, also z.B. nach Abschluss der Startupphase einer solchen Heizvorrichtung, zufriedenstellende Ergebnisse bei der Behälterqualität erreichbar sind, da die im Stand der Technik bekannten Steuerungseinrichtungen der Heizvorrichtungen ausreichend funktionieren, ergeben sich Probleme in der Behälterqualität vor dem Dauerbetrieb, nämlich vor Erreichen eines zumindest annähernd thermodynamisch stabilen Gleichgewichtszustandes. Grundsätzlich wäre es natürlich möglich, die Startupzeit der Heizvorrichtung so auszugestalten, dass mit guter Zuverlässigkeit ein annähernd thermodynamisch stabiler Gleichgewichtszustand erreicht ist, also zum Beispiel die Bauteile der Heizvorrichtung ihren thermischen Gleichgewichtszustand oder einen Zustand nahe ihres thermischen Gleichgewichtes erreicht haben, bevor begonnen wird, die Vorformlinge in die Heizvorrichtung einlaufen zu lassen. Dies würde aber auch bedeuten, dass vor Aufnahme der Behälterproduktion einige Zeit vergeht. Typische Startupzeiten liegen im Bereich von Minuten und können zum Beispiel 5 Minuten betragen. Für eine effektivere Ausnutzung der vorhandenen Maschinen und für eine effektivere Nutzung der Heizenergie ist aber eine möglichst frühe Produktionsaufnahme wünschenswert. Deshalb wird im Stand der Technik auch schon mit der Behälterproduktion begonnen, weit bevor die Heizvorrichtung ihren Dauerbetriebszustand erreicht hat, also noch innerhalb der Startupphase.

Es ist hierbei bekannt, dass in dieser Startupphase die Heizungsvorrichtung anders als im Dauerbetrieb geregelt bzw. gesteuert wird. Die vorstehend beschriebene Regelung anhand einer Messung der Temperatur der Vorformlinge und der Übergang in den Dauerbetriebszustand ist ohnehin erst dann möglich, wenn die ersten Vorformlinge die Heizvorrichtung verlassen, da erst zu diesem Zeitpunkt ein Führungswert durch Messung der Vorformlingstemperatur generiert werden kann. Es ist deshalb bekannt, dass zum Beispiel nach Erreichen einer ersten Solltemperatur in der Heizvorrichtung die Heizvorrichtung in anderer Art betrieben wird als zu einem Zeitpunkt, zu dem eine erste Temperaturmessung der Vorformlinge erfolgt. Ab dann greift z.B. die vorstehend beschriebene Regelung der Heizvorrichtung im Dauerbetrieb. Vorher wird die Heizvorrichtung nach einem anderen Verfahren betrieben.

Bevor die Heizvorrichtung ihren thermodynamisch stabilen Gleichgewichtszustand bei voller Produktionsleistung erreicht, wird tendenziell zu wenig Wärmeenergie in die Vorformlinge eingebracht. Der Grund besteht darin, dass die Bauteile bis zum Erreichen ihres stationären thermischen Gleichgewichtszustands mehr Strahlungsenergie absorbieren als emittieren, die den Vorformlingen fehlt. Zudem wirken die erwärmten Bauteile der Vorrichtung als Sekundärstrahler, die mit zunehmender Temperatur mehr langwellige Strahlung abgeben, die besonders gut zum Beispiel von PET absorbiert wird.

Vor Erreichen des thermodynamisch stabilen Gleichgewichtszustandes ist dieser langwellige Strahlenanteil durch Sekundärstrahler niedriger. Aus diesem Grunde ist es im Stand der Technik bekannt, dass bei Beladung der Heizvorrichtung mit Vorformlingen vor Erreichen des Dauerbetriebszustandes und somit auch deutlich vor Erreichen des thermodynamisch stabilen Gleichgewichtszustandes die Gesamtheizleistung der Heizvorrichtung auf einen höheren Wert eingestellt wird, als dies einem Basiswert für den Dauerbetrieb entspricht. Dieser höhere Heizleistungswert für die Heizvorrichtung wird zunächst konstant gehalten, bis die Heizvorrichtung vollständig beladen ist. Erst danach greift die Regelung für den Dauerbetrieb wie eingangs beschrieben ein, da erst dann Temperaturmessungen an Vorformlingen möglich sind.

Die vorstehend beschriebenen Heizvorrichtungen des Standes der Technik werden also zunächst gestartet und die Heizelemente werden mit einer bestimmten, voreingestellten Startleistung betrieben. Bei Erreichen einer bestimmten ersten Temperatur in der Heizvorrichtung laufen die ersten Vorformlinge in die Heizvorrichtung hinein und die Heizvorrichtung bzw. die Heizelemente der Heizvorrichtung werden mit einem vorgegebenen Leistungswert betrieben. Die Heizvorrichtung wird gemäß dieser konstanten Wertvorgabe gesteuert. Erst ab Erreichen eines bestimmten vorgegebenen Ereignisses greift die Regelung der Heizvorrichtung für den Dauerbetrieb. Dieses vorgegebene Ereignis kann zum Beispiel das Erfassen erster Oberflächentemperaturen von Vorformlingen sein.

Nachteilig bei der vorstehend beschriebenen Steuerung der Heizvorrichtung im Startupbetrieb ist, dass die aus der Heizvorrichtung auslaufenden Vorformlinge noch keine sehr einheitliche Temperatur und noch kein sehr einheitliches Temperaturprofil haben können, da die feste Einstellung eines Leistungswertes für die Heizelemente lediglich ein geeigneter Mittelwert für die Startupphase darstellen kann. Die aus diesen Vorformlingen hergestellten Behälter weisen daher noch eine relativ große Streuung in ihren Eigenschaften auf. Zudem können in der vorstehend beschrieben Startupphase, und auch nach der Startupphase, Prozessschwankungen auftreten. Ursachen für solche Schwankungen sind Störgrößen die auf die Heizvorrichtung einwirken, wie beispielsweise eine sich ändernde Umgebungstemperatur, eine konstruktive Umbaumaßnahme an der Heizvorrichtung nach einer Betriebsstörung oder eine unterschiedliche Temperatur der Vorformlinge, wenn die Vorformlinge in die Heizvorrichtung eingegeben werden.

Es ist dabei bekannt, dass in der Startupphase der Heizvorrichtung vorgegebene höhere Heizleistung zum Beispiel einer sogenannten Trendkurve entnommen wird, die zum Beispiel empirisch bestimmte Zusammenhänge zwischen der Leistung der Heizvorrichtung und der Heizvorrichtungstemperatur enthält. Die Steuerung der Heizvorrichtung bzw. der Heizleistung der Heizvorrichtung in dieser Startupphase erfolgt also anhand eines festen Leistungswertes aus einer solchen vorgegebenen Trendkurve, wobei es im Stand der Technik auch bekannt ist, eine gemessene Umgebungstemperatur zu berücksichtigen, indem die empirisch motivierte Trendkurve je nach erfasster Umgebungstemperatur verschoben wird. Zusammengefasst ist es im Stand der Technik also bekannt, dass vor Erreichen des Dauerbetriebszustandes der Heizvorrichtung die Heizvorrichtung nicht anhand zum Beispiel einer Temperaturmessung am Vorformling geregelt wird, sondern dass die Heizelemente mit zeitlich konstanter Leistung betrieben werden, wobei der einzustellende Leistungswert einer Trendkurve entnommen wird. Solche Trendkurven zum Steuern einer Heizvorrichtung zu verwenden ist somit grundsätzlich bekannt, beispielsweise aus der WO 2019/048419 A1.

Die bekannten Trendkurven aus dem Stand der Technik werden manuell erstellt und in der Steuerung der Heizvorrichtung hinterlegt. Die Erstellung einer Trendkurve beruht im Wesentlichen auf der Erfahrung des Bedienpersonals der Maschine bzw. der Heizvorrichtung. Die Trendkurven unterliegen somit den subjektiven Erfahrungen der Bedienperson. Daneben ist es in der Praxis auch üblich, das Bedienpersonen zum Teil davor zurückschrecken, die Trendkurven aufgrund ihrer Komplexität zu erstellen und zu nutzen. Es werden in diesem Fall die Prozessschwankungen hingenommen oder es wird die Heizvorrichtung solange erwärmt bis sich annähernd ein thermisch stabiler Gleichgewichtszustand der Heizvorrichtung eingestellt hat. Es versteht sich, dass dies einer optimalen Maschinenauslastung abträglich ist. Zudem könnten falsch durch die Bedienpersonen eingestellte Trendlinien dazu führen, dass eine hohe thermische Belastung bis hin zur Überlastung von Komponenten der Heizvorrichtung entsteht, wie eine thermische Überlastung der Transportdornen oder der Heizstrahler.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der eine optimierte Betriebsweise einer Heizvorrichtung in einer Startupphase erreicht wird.

Diese Aufgabe wird gelöst durch ein Verfahren nach Anspruch 1.

Erfindungsgemäß wird ein Verfahren zum Betreiben einer Heizvorrichtung für die Temperaturkonditionierung von Vorformlingen aus einem thermoplastischen Material in der Heizvorrichtung vorgeschlagen. Dabei wird der jeweilige Vorformling durch die thermische Konditionierung in der Heizvorrichtung auf einen nachfolgenden Umformungsvorgang vorbereitet, bei dem mit einem unter einem Druck in den Vorformling zugeführten Umformfluid der Vorformling in einen Behälter umgeformt wird. Es wird also vorgeschlagen, den Vorformling mittels einer Heizvorrichtung zu erwärmen, um diesen anschließend, z. B. in einer Blaseinrichtung in einen Behälter umzuformen. Als thermoplastisches Material wird vorzugsweise PET (Polyethylenterephthalat) oder dergleichen vorgeschlagen. Die thermische Konditionierung bezieht sich also auf einen Erwärmungsprozess des Vorformlings. Wie zuvor beschrieben ist es bekannt, den temperaturkonditionierten Vorformling mit Hilfe eines Druckgases (Druckluft) als Druckmedium umzuformen und anschließend zu befüllen oder mit einem hydraulisches Druckmedium gleichzeitig mit einem flüssigen Füllgut zu befüllen. Konditionierung kann demnach auch als Vorbereiten ausgefasst werden. Eine thermische Konditionierung ist also eine thermische Vorbereitung des jeweiligen Vorformlings auf ein anschließendes Umformen zu einem Behälter. Ein Behälter ist beispielsweise eine Flasche oder dergleichen.

Dabei wird weiter vorgeschlagen, dass die Heizvorrichtung in mehreren Betriebszuständen betrieben wird, nämlich wenigstens in einem ersten und in einem zweiten Betriebszustand, wobei der Betrieb der Heizvorrichtung im zweiten Betriebszustand für eine Startupphase der Heizvorrichtung erfolgt, in der sich eine Temperatur der Heizvorrichtung einer Gleichgewichtstemperatur eines thermodynamisch stabilen Gleichgewichtszustandes der Heizvorrichtung annähert, wobei der Betrieb der Heizvorrichtung im ersten Betriebszustand erfolgt für einen sich an die Startupphase anschließenden Dauerbetrieb der Heizvorrichtung. Es wird also vorgeschlagen, dass die Heizvorrichtung wenigstens in einem ersten und zweiten Betriebszustand betreibbar ist. Der zweite Betriebszustand ist dabei ein Betriebszustand der Heizvorrichtung, in dem ein thermodynamisch stabiler Gleichgewichtszustand noch nicht erreicht ist, das heißt, die Heizstrahler und die sonstigen Elemente der Heizvorrichtung haben ihren thermodynamischen Gleichgewichtszustand noch nicht erreicht. In diesem zweiten Betriebszustand streben die Heizstrahler und die übrigen Elemente noch dem thermischen Gleichgewichtszustand entgegen. Bezogen auf typische Zykluszeiten eines Umformprozesses von der thermischen Konditionierung bis zum fertigen Behälter verändern sich deren Temperaturen und deren Strahlverhalten noch in Richtung auf einen dynamischen Gleichgewichtszustand. Typische Zykluszeiten liegen im Bereich von 10 Sekunden, und diese Änderungen sind in diesem Zeitfenster z.B. bezogen auf die Heizvorrichtungstemperatur im Bereich von einigen Grad Celsius. Der zweite Betriebszustand kann dabei auch als Anlaufzustand der Heizvorrichtung verstanden werden, wenn sich die Heizvorrichtung noch nicht im thermischen Gleichgewichtszustand befindet. Der zweite Betriebszustand kann beispielsweise ein Kaltstart oder ein Warmstart sein.

Die Begriffe Dauerbetriebszustand und erster Betriebszustand und die Begriffe Startupzustand/Startupphase und zweiter Betriebszustand werden synonym verwendet.

Der erste Betriebszustand ist dabei ein Betriebszustand der Heizvorrichtung, in dem ein thermodynamisch stabiler Gleichgewichtszustand erreicht ist. Der erste Betriebszustand kann auch als Dauerbetrieb verstanden werden, indem die Heizvorrichtung ihre Gleichgewichtstemperatur im thermodynamisch stabilen Gleichgewichtszustand erreicht hat und in diesem Zustand betrieben wird. Dieser thermodynamisch stabile Gleichgewichtszustand liegt vor, wenn nach einer gewissen Betriebsdauer, die die Heizvorrichtung bildenden Elemente wie Heizelemente, Reflektoren etc. eine Temperatur erreicht haben, die bei fortdauerndem Betrieb im Wesentlichen konstant bleibt. Im ersten Betriebszustand erfolgt im Stand der Technik eine Regelung der Heizleistung nach einem von einem Messsensor erfassten Führungswert innerhalb eines Regelkreises, wobei der Führungswert bzw. die Führungsgröße beispielsweise eine gemessene Temperatur des Vorformlings ϑ_{Preform,ist}.

Besonders wird vorgeschlagen, dass im zweiten Betriebszustand eine Sollwertkennlinie zur künftigen Ansteuerung der Heizvorrichtung erstellt wird, indem Stützstellen der Sollwertkennlinie zu vorbestimmten Zeitpunkten in Abhängigkeit einer erfassten Abweichung zwischen einem Referenzwert und einem Regelungsistwert einer Regelgröße ermittelt werden.

Es wird also vorgeschlagen, dass in der Startupphase bzw. in dem zweiten Betriebszustand eine Sollwertkennlinie erstellt wird. Die Sollwertkennlinie kann dabei auch als die zuvor beschriebene Trendkurve verstanden werden. Die Sollwertkennlinie ist eine Kennlinie für einen Sollwert, beispielsweise eine Sollwertkennlinie für eine Regelung der Heizleistung von Heizstrahlern der Heizvorrichtung. Die Sollwertkennlinie gibt in Abhängigkeit einer Eingangsgröße einen Sollwert für die Ansteuerung der Heizvorrichtung aus, wobei die Eingangsgröße vorzugsweise eine gemessene Temperatur an der Heizvorrichtung ist. Die Sollwertkennlinie wird für eine künftige Ansteuerung der Heizvorrichtung erstellt, sprich, es wird vorgeschlagen, dass die Sollwertkennlinie nach ihrer Erstellung zur Ansteuerung der Heizeinrichtung verwendet werden kann. Die Sollwertkennlinie wird dazu beispielsweise zunächst ermittelt und dann aufrufbar in der Steuerung der Heizvorrichtung gespeichert. Es versteht sich, dass hierzu eine Speichereinheit vorgesehen ist. Die Speichereinheit ist beispielsweise Teil der Steuerung der Heizvorrichtung oder der Umformmaschine oder eine externe Speichereinheit, die beispielsweise auf einem externen Server ausgebildet ist. Die externe Speichereinheit kann auch als Onlinespeicher bezeichnet werden.

Die Sollwertkennlinie ist aus einer Vielzahl von Stützstellen ausgebildet, die einen Verlauf der Sollwertkennlinie darstellen. Stützstellen sind dabei grundsätzlich aus der Mathematik bekannt. Die Stützstellen können auch als diskrete Funktionswerte der Sollwertkennlinie verstanden werden. Die Stützstellen bilden im Grunde einen diskreten Verlauf der Sollwertkennlinie aus.

Die Stützstellen werden dabei ermittelt, indem diese zu vorbestimmten Zeitpunkten in Abhängigkeit einer erfassten Abweichung zwischen einem Referenzwert und einem erfassten Regelungsistwert ermittelt werden. Es wird also vorgeschlagen, die Stützstellen zu unterschiedlichen Zeitpunkten zu ermitteln, beispielsweise zu festgelegten Zeitpunkten und/oder zu vorbestimmten temperaturabhängigen Schritten. In einer bevorzugten Ausführungsform entsprechen die vorbestimmten Zeitpunkte x-Koordinaten der ermittelten Sollwertkennlinie.

Zudem wird vorschlagen, dass die Stützstellen in Abhängigkeit einer erfassten Abweichung zwischen einem Referenzwert und einem erfassten Regelungsistwert ermittelt werden. Ein Referenzwert kann beispielsweise ein vorgegebener Sollwert sein oder ein vorgegebener Vergleichswert sein, z. B. ein konstanter Wert. Der Regelungsistwert entspricht dabei einem aktuellen Wert eine Größe, die in der Regelung der Heizvorrichtung verwendet wird. Beispielsweise ist ein Regelungsistwert eine erfasste Regelgröße, z. B. eine gemessene Temperatur des Vorformlings am Ende der thermischen Konditionierung. Der Regelungsistwert kann aber auch eine ausgegebene Stellgröße eines Reglers der Heizvorrichtung sein. Zudem kann der Regelungsistwert auch eine an der Heizvorrichtung gemessene Temperatur sein. Der Regelungsistwert bezieht sich somit nicht nur auf die Regelgröße, die am Ausgang der Regelung der Heizvorrichtung ausgegeben wird, sondern auch auf einen Augenblickswert einer Größe, die in der Regelung der Heizvorrichtung verwendet wird.

Das vorstehende Verfahren kann auch als ein Verfahren zum Ermitteln einer Sollwertkennlinie zur künftigen Ansteuerung einer Heizvorrichtung für die Temperaturkonditionierung von Vorformlingen aus einem thermoplastischen Material aufgefasst und bezeichnet werden.

Es wurde vorliegend erkannt, dass auf Basis der augenblicklichen Abweichung zwischen einem Regelungsistwert und einem Referenzwert eine Trendkurve automatisiert erstellbar ist. Dabei liegt die Erkenntnis zugrunde, dass die erfassten Abweichungen in der Regelung der Heizvorrichtung Rückschlüsse auf den thermischen Zustand der Heizrichtung zulassen. Liegt beispielsweise eine große Abweichung vor, befindet sich die Heizvorrichtung noch nicht im thermischen stabilen Zustand. Liegen kleine Abweichung vor liegt die Heizvorrichtung näher am thermisch stabilen Zustand. Der Verlauf der erfassten Abweichungen kann also genutzt werden, um die Sollwertkennlinie bzw. die Trendkurve zu erstellen.

Im Gegensatz zu bekannten Verfahren, indem Trendkurve manuell und empirisch vorgegeben werden, wird somit eine automatisierte Erstellung einer Trendkurve vorgeschlagen. Damit werden gleich mehrere Vorteile erreicht. Zum einen werden falsch eingestellte Trendkurven bzw. Sollwertkennlinien reduziert, womit die Heizvorrichtung in einer optimierte Betriebsweise arbeitet. Zudem muss sich eine Bedienperson nicht damit auseinandersetzen wie die komplexe Trendkurve zu erstellen ist, da sich die Kurve automatisch erstellt. Dies erleichtert die Bedienbarkeit der Heizvorrichtung deutlich. Zudem können die Trendkurven gespeichert und für zukünftige Betriebszustände verwendet werden.

Vorzugsweise ist die Sollwertkennlinie eine Heizleistungssollwertkennlinie zur Ansteuerung der Heizvorrichtung. Es wird also vorgeschlagen, dass die Sollwertkennlinie einen Sollwert für die Heizleistung der Heizvorrichtung ausgibt. Dieser Heizleistungssollwert wird dann beispielsweise Heizstrahlern der Heizvorrichtung als Stellgröße vorgegeben.

Weiter vorzugsweise wird mit der Heizleistungssollwertkennlinie in Abhängigkeit eines gemessenen Temperaturistwerts der Heizvorrichtung ein Heizleistungssollwert zur Ansteuerung der Heizvorrichtung erzeugt. Es wird also vorgeschlagen, dass die Sollwertkennlinie in Abhängigkeit einer Eingangsgröße einen Sollwert für die Ansteuerung der Heizvorrichtung ausgibt, wobei die Eingangsgröße ein gemessener Temperaturistwert an der Heizvorrichtung ist. Die Sollwertkennlinie gibt also einen Sollwert zur Ansteuerung der Heizvorrichtung in Abhängigkeit eines gemessenen Temperaturistwerts der Heizvorrichtung aus. Der Temperaturistwert kann beispielsweise mit wenigstens einem Temperatursensor gemessen werden. Es ist auch möglich, mehrerer solcher Temperatursensoren vorzusehen. Vorzugsweise wird das Ermitteln der Stützstellen so ausgeführt, dass ein Funktionswert einer Stützstelle mit sinkender Abweichung absinkt. Es wird also vorgeschlagen, dass je größer die erfasste Abweichung, desto größer ist auch der erzeugte Sollwert. Es wird also vorgeschlagen, dass der ausgegebene bzw. erzeugte Sollwert dem Trend der erfassten Abweichung folgt. Eine große Abweichung resultiert beispielsweise zu einem größeren erzeugten Sollwert. Eine kleinere Abweichung resultiert umgekehrt zu einem kleineren erzeugten Sollwert.

Vorzugsweise ist die künftige Ansteuerung eine Ansteuerung der Heizvorrichtung im ersten Betriebszustand mit der Sollwertkennlinie, nachdem die Sollwertkennlinie ermittelt wurde, und/oder die künftige Ansteuerung ist eine Ansteuerung der Heizvorrichtung in einem zweiten Betriebszustand mit der Sollwertkennlinie, nachdem die Sollwertkennlinie erstellt wurde. Es wird also vorgeschlagen, dass die ermittelte Sollwertkennlinie in einem an den zweiten Betriebszustand anschließenden Dauerbetrieb verwendet wird und/oder in einem anderen zweiten Betriebszustand, der dem erstmaligen zweiten Betriebszustand folgt.

Die Verwendung der Sollwertkennlinie für die künftige Ansteuerung in den beiden Betriebsmodi ist dabei vorteilhaft, da mit einer solchen Kennlinie unterschiedlichen Umgebungsbedingungen Rechnung getragen werden kann. Beispielsweise kann es vorkommen, dass Maschinen gleicher Bauart in unterschiedlichen Ländern zum Einsatz kommen, in denen Temperaturunterschiede oder Luftfeuchtigkeitsunterschiede bestehen. Wird eine Maschine dann mit einer geeigneten Kennlinie betrieben, beispielsweise in einer zweiten Start-Up Phase oder im Dauerbetrieb, kann die Maschine mit einer geeigneten Kennlinie immer wieder angefahren werden und später in den angestrebten Dauerbetrieb überführt werden. Es wird also vorgeschlagen, eine Kennlinie z. B. einmal aufzuzeichnen und in einem anschließenden Betrieb die erstellte Kennlinie wieder zu verwenden, Es kann also vorgesehen, die Kennlinie einmalig oder im Bedarfsfall auch mehrmalig zu bestimmen.

Vorzugsweise sind die vorbestimmten Zeitpunkte fest vorgegebene Zeitpunkte, beispielsweise feste Zeitpunkte im Sekundenbereich. Die fest vorgegebene Zeitpunkte können auch als feste zeitliche Schritte aufgefasst werden. Beispielsweise wird jede Sekunde eine Stützstelle ermittelt.

Zusätzlich oder alternativ sind die vorbestimmten Zeitpunkte vorbestimmte temperaturabhängige Zeitpunkte. Es wird also vorgeschlagen, die Zeitpunkte in Abhängigkeit eines Temperaturverlaufes zu erstellen. Beispielsweise können Schwellenwerte von 0%; 5%; 10% ... 95%, 100% für eine gemessene Temperatur eines Vorformlings oder der Heizvorrichtung festgelegt werden. Ein vorbestimmter Zeitpunkt entspricht dann dem Zeitpunkt, an dem der Schwellenwert erreicht wird. Die temperaturabhängigen Zeitpunkte sind somit Zeitpunkte, die zu vorbestimmten und erfassten Temperaturwerten des Vorformlings vorliegen oder die zu vorbestimmten und erfassten Temperaturwerten der Heizvorrichtung im zweiten Betriebszustand vorliegen. Es versteht sich, dass dazu die Temperatur des Vorformlings und/oder der Heizvorrichtung entsprechend mit einem Temperatursensor gemessen werden.

Vorzugsweise werden die erfassten Stützstellen als Trendkurve interpoliert, insbesondere linear oder quadratisch interpoliert werden. Dies ist vorteilhaft, da die interpolierte Trendkurve zur kontinuierlichen Regelung einsetzbar ist und zudem ist auch der Trend deutlicher zu erkennen ist, wenn dieser beispielsweise als Kurve angezeigt wird.

Vorzugsweise wird die erstellte Sollwertkennlinie oder die interpolierte Trendkurve an einer Anzeige der Heizvorrichtung angezeigt. Es wird also vorgeschlagen, dass die Heizvorrichtung eine Anzeige bzw. ein Display aufweist, um die Sollwertkennlinie anzuzeigen. Damit kann die Sollwertkennlinie von außen überwacht und nachvollzogen werden.

Vorzugsweise wird die erstellte Sollwertkennlinie in einer Speichereinheit der Heizvorrichtung und/oder in einem Onlinespeicher und/oder in einer Speichereinheit der Umformmaschine nach Erstellung gespeichert und wird aufrufbar zur künftigen Ansteuerung der Heizvorrichtung hinterlegt. Die Speichereinheit kann auch als Speichermodul oder Datenspeicher aufgefasst werden. Die Speichereinheit ist beispielsweise Teil der Ansteuerung der Heizvorrichtung. Die Speichereinheit ist beispielsweise ein nichtflüchtiger Speicher. Durch die Hinterlegung der ermittelten Sollwertkennlinie im Onlinespeicher bzw. auf einem externen Server, können die ermittelten Kennlinien zum Download für anderen Maschinen bereitgestellt werden, die beispielsweise eine gleiche Bauart aufweisen.

Vorzugsweise werden die bestimmten Stützstellen manuell veränderlich in einer Speichereinheit der Heizvorrichtung und über eine Eingabeschnittstelle der Heizvorrichtung individuell anpassbar hinterlegt. Es wird also vorgeschlagen, dass eine manuelle Anpassung der Sollwertkennlinie bereitgestellt wird, nachdem die Kennlinie automatisiert erstellt und in der Speichereinheit hinterlegt wurde. Damit kann die Bedienperson der Heizvorrichtung nachträglich Anpassungen an der Trendkurve vornehmen. Die Eingabeschnittstelle ist beispielsweise ein Bedienterminal an der Heizvorrichtung, an dem die Sollwertkennlinie durch eine manuelle Eingabe verändert werden kann.

Vorzugsweise ist die erfasste Abweichung eine Abweichung zwischen einem Temperatursollwert eines Vorformlings und einem gemessenen Temperaturistwert eines Vorformlings. In einer besonders bevorzugten Ausführungsform wird der gemessene Temperaturistwert mit einem Temperatursensor am Ende der thermischen Konditionierung des Vorformlings erfasst, und der Temperatursollwert ist ein Temperatursollwert eines Vorformlings am Ende der thermischen Konditionierung.

Vorzugsweise ist die erfasste Abweichung eine Abweichung zwischen einem Vergleichswert und einer Steuergröße eines Reglers der Heizvorrichtung. In einer besonders bevorzugten Ausführungsform ist der Vergleichswert gleich null, um eine Abweichung der Steuergröße zu null festzustellen.

Vorzugsweise ist die erfasste Abweichung eine Abweichung zwischen einem Vergleichswert und einer Summensteuergröße zur Ansteuerung des Heizvorrichtung, wobei die Summensteuergröße aus einer Steuergröße eines Reglers der Heizvorrichtung und wenigstens einer erfassten Störgröße ausgebildet ist. In einer besonders bevorzugten Ausführungsform ist der Vergleichswert gleich null ist, um eine Abweichung der Summensteuergröße zu null festzustellen.

Vorzugsweise ist die erfasste Abweichung eine Abweichung zwischen einem Vergleichswert und einem gemessenen Temperaturistwert der Heizvorrichtung. In einer besonders bevorzugten Ausführungsform ist der Vergleichswert ein Temperatursollwert der Heizvorrichtung.

Als weiterer Aspekt wird eine Heizvorrichtung für die Temperaturkonditionierung von Vorformlingen aus einem thermoplastischen Material in der Heizvorrichtung offenbart, wobei der jeweilige Vorformling durch die thermische Konditionierung in der Heizvorrichtung auf einen nachfolgenden Umformungsvorgang vorbereitet wird, bei dem mit einem unter einem Druck in den Vorformling zugeführten Umformfluid der Vorformling in einen Behälter umgeformt werden kann, wobei die Heizvorrichtung eine Steuereinrichtung aufweist, die die Heizvorrichtung wenigstens in einem ersten Betriebszustand und in einem zweiten Betriebszustand betreibt, wobei der Betrieb der Heizvorrichtung im zweiten Betriebszustand ein Startupzustand der Heizvorrichtung ist, in der sich eine Temperatur der Heizvorrichtung einer Gleichgewichtstemperatur eines thermodynamisch stabilen Gleichgewichtszustandes der Heizvorrichtung annähert, wobei der Betrieb der Heizvorrichtung im ersten Betriebszustand ein sich an den Startupzustand anschließender Dauerbetrieb der Heizvorrichtung ist. Dabei ist die Steuereinrichtung zur Ausführung des Betriebsverfahrens nach einer der vorstehenden Ausführungsformen ausgebildet. Die zuvor beschriebenen Vorteile, Erläuterungen und Definitionen zum vorstehenden Verfahren finden analog Anwendung auf die zuvor beschriebene Heizvorrichtung und umgekehrt.

Als weiterer Aspekt wird eine Maschine offenbart für die Herstellung von Behältern aus Vorformlingen durch Umformung mittels eines unter Druck in den Vorformling eingeleiteten Formfluides und mit einer Heizvorrichtung für die Temperaturkonditionierung der Vorformlinge, wobei die Heizvorrichtung nach einer der vorstehenden Ausführungsformen ausgeführt ist. Die zuvor beschriebenen Vorteile, Erläuterungen und Definitionen zum vorstehenden Verfahren und zur Heizvorrichtung finden analog Anwendung auf die zuvor beschriebene Maschine und umgekehrt.

Mit Vorteil wird zum Beispiel vorgeschlagen, dass in der Heizvorrichtung ein Temperatursensor angeordnet wird. Dieser Temperatursensor dient der Erfassung einer Temperatur der Heizvorrichtung und dieser Temperatursensor kann zum Beispiel, wie aus dem Stand der Technik grundsätzlich bekannt, angeordnet und ausgebildet sein.

Weitere Vorteile, Merkmale und Details der Erfindung ergeben sich aus den im Folgenden beschriebenen Ausführungsbeispielen unter Bezugnahme auf schematische Zeichnungen. Es zeigen:
- Fig. 1: eine stark schematisierte Darstellung einer Umformmaschine bzw. einer Maschine zum Formen von Behältern aus Vorformlingen,
- Fig. 2: eine schematisierte Darstellung eines Heizkastens einer Heizvorrichtung,
- Fig. 3: eine Prinzipdarstellung eines temperaturkonditionierten Vorformlings mit Temperaturprofilierung,
- Fig. 4: eine schematische Darstellung einer möglichen Steuerungsarchitektur einer Umformmaschine,
- Fig. 5: ein bekanntes Regelungsschema für die Regelung einer Heizvorrichtung,
- Fig. 6: ein erfindungsgemäßes Regelungsschema für die Regelung einer Heizvorrichtung.

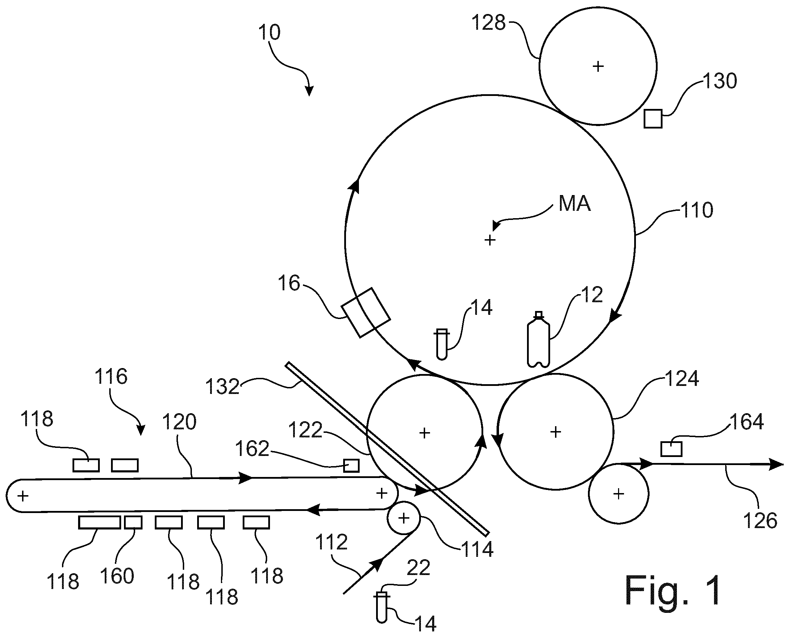

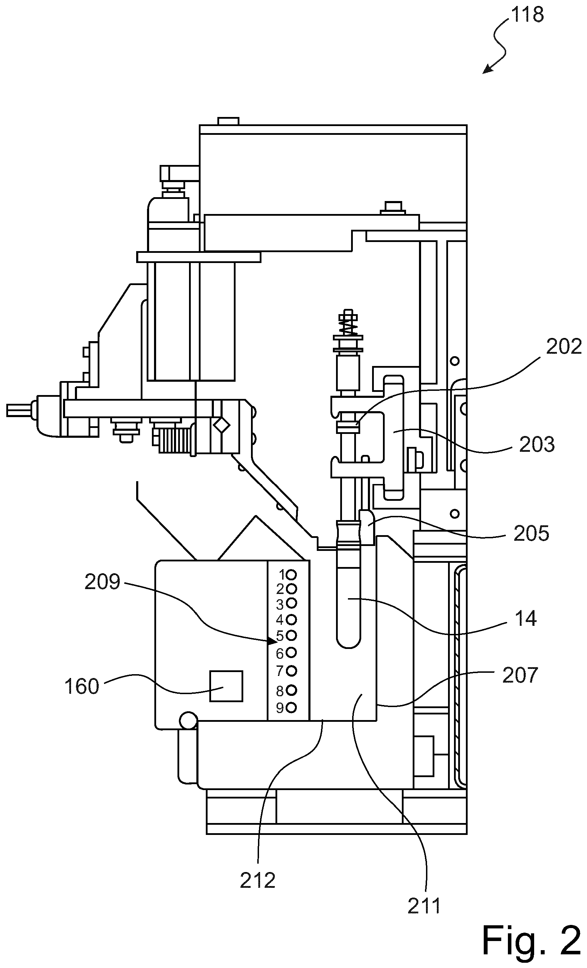

Der prinzipiell aus dem Stand der Technik bekannte Aufbau einer Umformmaschine 10 ist in Figur 1 dargestellt. Die Darstellung zeigt die bevorzugte Ausbildung einer solchen Umformmaschine 10 in der Art einer Rotationsmaschine mit einem mehrere Umformstationen 16 tragenden, rotierenden Arbeitsrad 110. Zur zeichnerischen Vereinfachung ist allerdings lediglich eine solche Umformstation 16 dargestellt. Von einer Zuführeinrichtung 112 werden schematisch dargestellte Vorformlinge 14, die auch als Preforms bezeichnet werden, unter Verwendung eines Übergaberades 114 kontinuierlich einer Heizvorrichtung 116 zugeführt. Im Bereich der Heizvorrichtung 116, die auch als Ofen bezeichnet wird, und in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Heizvorrichtung 116 ist beispielsweise mit Heizeinrichtungen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizeinrichtungen 118 eignen sich beispielsweise Heizkästen mit IR-Strahlern oder Licht emittierenden Dioden oder NIR-Strahlern. Da solche Heizvorrichtungen in vielfältiger Art im Stand der Technik bekannt sind, und da die konstruktiven Einzelheiten der Heizeinrichtungen für die vorliegende Erfindung nicht wesentlich sind, kann auf eine über die Beschreibung zur Figur 2 hinausgehende, detailliertere Beschreibung verzichtet und auf den Stand der Technik verwiesen werden, insbesondere auf den Stand der Technik zu Heizvorrichtungen von Blas- und von Streckblasmaschinen und zu Heizvorrichtungen von Form- und Füllmaschinen, die allesamt von dem Begriff Umformmaschinen umfasst sind.

Nach einer ausreichenden Temperaturkonditionierung werden die Vorformlinge 14 von einem Übergaberad 122 zu einem rotationsfähig angeordneten, d.h. um eine vertikale Maschinenachse MA umlaufend antreibbaren Arbeitsrad 110 bzw. an Umformstationen 16 übergeben, die an dem Arbeitsrad 110 umfangsverteilt angeordnet sind. Das Arbeitsrad 110 ist mit einer Mehrzahl solcher Umformstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als Druckmedium beim Formen dient. Bei Blasmaschinen erfolgt hingegen keine Befüllung auf diesem Arbeitsrad 110, sondern zu einem späteren Zeitpunkt auf einem Füllerrad mit Füllstationen.

Nach dem Formen und Füllen werden die fertig geformten und gefüllten Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Umformstation 16, die Expansion des Vorformlings 14 zu einem Behälter 12 inklusive Füllung mit einem Füllgut und ggf. inkl. Reckung, falls eine Reckstange vorgesehen ist, und die Entnahme des Behälters 12 aus der Umformstation 16.

Gemäß der Ausführungsform in Figur 1 ist weiterhin vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung des Entnahmerades 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Heizvorrichtung 116 sind typischerweise eine Vielzahl von elektrischen und elektronischen Bauteilen angeordnet. Darüber hinaus sind die Heizeinrichtungen 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, sollte bevorzugt zur Vermeidung elektrischer Probleme dafür gesorgt werden, dass ein unbeabsichtigter Eintrag von Feuchtigkeit in den Bereich der Heizvorrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Heizvorrichtung 116 gelangen kann.

Eine Handhabung der Vorformlinge 14 und/oder der Behälter 12 erfolgt vorzugsweise unter Verwendung von Zangen und/oder dem Mündungsabschnitt 22 mit wenigstens bereichsweise von innen oder von außen mit einer Haltekraft beaufschlagenden Klemm- oder Steckdornen. Solche Handhabungsmittel sind ebenfalls aus dem Stand der Technik hinlänglich bekannt.

Die Umformmaschine 10 ist zum Zwecke ihrer Steuerung bzw. zum Zwecke ihrer Regelung mit Messsensoren ausgestattet. So ist es zum Beispiel üblich, dass in der Heizvorrichtung 116 ein Temperatursensor 160 angeordnet wird, um eine Temperatur der Heizvorrichtung 116 messen zu können. Weiterhin ist es im Stand der Technik bekannt, dass auslaufseitig der im Uhrzeigersinn umlaufenden Transporteinrichtung 120 ein Temperatursensor 162 angeordnet ist, der zum Beispiel als Pyrometer ausgebildet ist und der zum Beispiel an daran vorbeilaufenden temperaturkonditionierten Vorformlingen 14 eine Oberflächentemperatur erfasst. Der Temperatursensor 162 ist somit am Ende der thermischen Konditionierung angeordnet. Schließlich ist es im Stand der Technik auch bekannt, mit Messsensoren Messungen an fertigen Behältern 12 vorzunehmen. So kann zum Beispiel an der Ausgabestrecke 126 ein Wanddickenmesssensor 164 angeordnet sein, um die Wanddicke eines daran vorbeigeführten Behälters zu erfassen. Die vorgenannten Sensoren können dabei auch aus mehreren höhenversetzt angeordneten Sensoren ausgebildet sein, um zum Beispiel entlang der Vorformlingslängsachse eine Temperaturmessung durchzuführen oder um zum Beispiel entlang der Behälterlängsachse eine Wanddickenmessung auszuführen. Auch in der Heizvorrichtung 116 können mehrere Temperatursensoren 160 angeordnet sein.

Der Bereich an dem die Vorformlinge in die Heizvorrichtung 116 eingegeben werden, also z. B. der örtliche Bereich, der der Zuführeinrichtung 112 und dem Übergaberades 114 folgt, entspricht einem Anfang der thermischen Konditionierung der Vorformlinge.

Der Bereich an dem die Vorformlinge aus der Heizvorrichtung 116 ausgeführt werden, also z. B. der örtliche Bereich, vor dem Übergaberad 122, entspricht einem Ende der thermischen Konditionierung.

Die in Figur 1 exemplarisch dargestellte Heizeinrichtung 118, die Teil der Heizvorrichtung 116 ist, könnte zum Beispiel wie in Figur 2 detaillierter in einer schematischen Schnittansicht gezeigt aussehen. Solche Heizeinrichtungen werden auch als Heizkästen bezeichnet. In der Regel sind mehrere dieser Heizkästen 118 nebeneinanderstehend entlang der Heizstrecke angeordnet zur Ausbildung eines Heiztunnels, durch den die Vorformlinge 14 hindurchgeführt werden, wie in der Figur 1 beispielhaft dargestellt ist.

In der Figur 1 ist ferner ein beispielhafter Weg der Vorformlinge 14 durch die Umformmaschine 10 mit Pfeilen dargestellt.

Der in Figur 2 in einer schematischen Schnittansicht dargestellte Heizkasten 118 weist mehrere Nahinfrarot-Strahler 209 auf, im dargestellten Ausführungsbeispiel sind neun Nahinfrarot-Strahler 209 in vertikaler Richtung übereinander angeordnet und jeder dieser Nahinfrarot-Strahler 209 definiert eine Heizebene. Diese NIR-Strahler 209 können bedarfsweise alle bei gleicher Leistung betrieben werden oder auch einzeln oder zu mehreren gruppiert bei unterschiedlichen Leistungen. Je nach axialer Erstreckung des Vorformlings 14 können in vertikaler Richtung untenliegende Strahlerebenen auch abgeschaltet sein. Zur Erzielung eines Temperaturprofiles in den Vorformlingen 14 ist in der Regel erforderlich, dass Nahinfrarot-Strahler 209 auf unterschiedlichen Strahlerebenen mit unterschiedlicher Heizleistung betrieben werden.

Den Nahinfrarot-Strahlern 209 gegenüberliegend ist ein Gegenreflektor 207 angeordnet, der darauf auftreffende Heizstrahlung zurück in Richtung auf den Vorformling 14 und somit zurück in den Heiztunnel 211 reflektiert. Der Heiztunnel 211 ist nach unten abgeschlossen durch einen Bodenreflektor 212. Der Vorformling 14 ist mündungsseitig durch eine Stützringabschirmung 205 gegen Heizstrahlung geschützt, da der Mündungsbereich mit daran ausgebildetem Gewinde vor unnötiger Erwärmung geschützt werden soll. Die Stützringabschirmung 205 ist dabei an der Handhabungseinrichtung 203 angeordnet, die ,wie zu Figur 1 erläutert, Teil einer umlaufenden Kette sein kann. Die Handhabungseinrichtung 203 weist weiterhin einen Klemmdorn 202 auf, der klemmend in den Mündungsabschnitt des Vorformlings 14 eingreift. Solche Klemmdorne 202 und solche Handhabungseinrichtungen 203 sind aus dem Stand der Technik hinlänglich bekannt und bedürfen keiner weiteren Erläuterung. Auch der grundsätzliche Aufbau dieses vorstehend beschriebenen Heizkastens 118 ist aus dem Stand der Technik bekannt.

Der in Figur 1 prinzipienhaft dargestellte Temperatursensor 160 ist im Heizkasten 118 der Figur 2 ebenfalls dargestellt, wobei dieser Temperatursensor 160 in der Regel hinter einem Reflektor angeordnet wird, zum Beispiel hinter dem Gegenreflektor 207. Dieser Temperatursensor 160 erfasst eine Temperatur des Heizkastens 118. Grundsätzlich wäre es auch möglich, eine Temperatur innerhalb des Heiztunnels 211 zu erfassen oder eine Temperaturmessung am Vorformling 14 innerhalb des Heiztunnels 211 vorzunehmen.

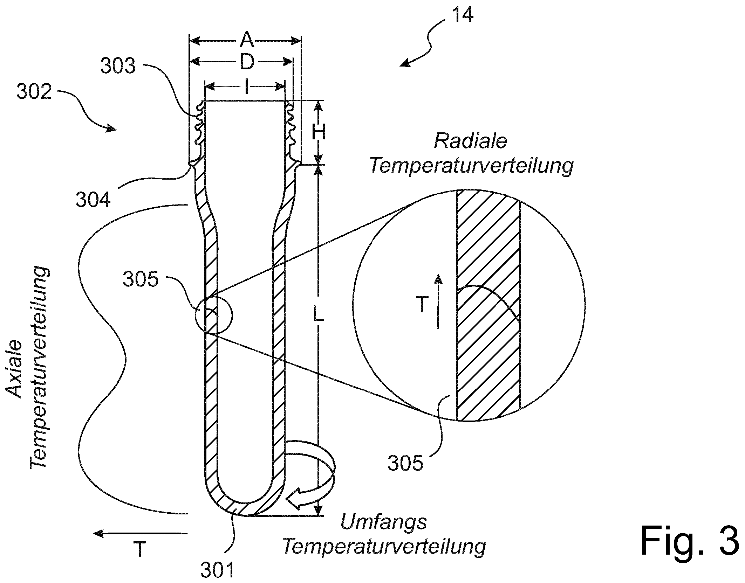

Figur 3 zeigt in einer Schnittansicht einen typischen Vorformling 14 mit einem geschlossenen Bodenbereich 301 und einem geöffneten Mündungsabschnitt 302. Im Bereich des Mündungsabschnittes 302 ist ein Außengewinde 303 sowie ein Stützring 304 ausgeformt. Nach erfolgter Temperaturkonditionierung ergibt sich in dem Vorformling 14 eine bestimmte Temperaturverteilung. So kann zum Beispiel durch eine entsprechende Beheizung in axialer Richtung des Vorformlings 14 ein Temperaturprofil erzeugt werden, wie dies linksseitig des Vorformlings 14 dargestellt ist. Es ist dort zu erkennen, dass im Bodenbereich und in einem Bereich unterhalb des Stützringes eine höhere Temperatur realisiert ist als in einem dazwischenliegenden Bereich. Es ist aber auch möglich, den Vorformling in axialer Richtung homogen aufzuheizen. Aus dem vergrößerten Abschnitt des Wandbereiches 305 ist ersichtlich, dass auch innerhalb der Vorformlingswand ein Temperaturverlauf einstellbar ist. Dies ist unter anderem dadurch bedingt, dass die Absorption der Heizstrahlung radial außen zu einer stärkeren Erwärmung führt, als radial innen. Temperaturunterschiede in der Vorformlingswand heben sich zwar mit der Zeit durch thermische Ausgleichsprozesse auf. Diese Temperaturausgleichsprozesse sind allerdings in den typischerweise aus PET bestehenden Vorformlingen relativ langsam. Zusätzlich kann der Vorformlinge 14 auch in Umfangsrichtung mit einem Temperaturprofil versehen werden. Dies ist zum Beispiel bekannt für Vorformlinge, die nachfolgend in unrunde Behälter umgeformt werden sollen, zum Beispiel in ovale Behälter.

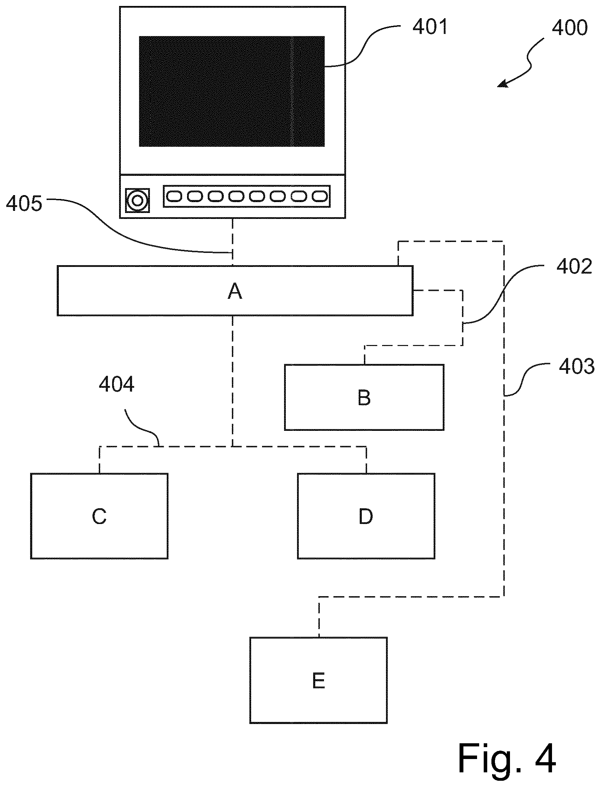

Figur 4 zeigt die schematische Darstellung einer möglichen modularen Steuerungsarchitektur einer Steuereinrichtung 400 für eine Umformmaschine 10. Mit dem Buchstaben A ist eine Mastersteuerung bezeichnet, Buchstabe B bezeichnet eine Steuereinrichtung für die Steuerung bzw. Regelung einer Heizvorrichtung, Buchstabe C bezeichnet eine Steuerung für den Antrieb zum Beispiel des Arbeitsrades 110, Buchstabe D bezeichnet Sicherheitseinrichtungen, wie zum Beispiel Notstop-Schalter, und Buchstabe E bezeichnet zum Beispiel eine Steuerungseinrichtung für den Umformprozess, also zum Beispiel für den möglichen Antrieb einer Reckstange, für Schaltventile zum Zu- oder Abschalten eines Umformfluides etc. Auf einem Display 401 können steuerungsrelevante Daten angezeigt werden und von der Mastersteuerung wird über eine Datenleitung 405 das Display 401 mit darzustellenden Werten versorgt. Das Display 401 kann auch als Eingabeeinheit fungieren und über diese Eingabeeinheit eingegebene Werte können über die Verbindungsleitung 405 an die Mastersteuerung A übergeben werden. Die weiteren Datenleitungen 402, 403 und 404 und Datenleitung 405 können zum Beispiel als Datenbus ausgeführt sein und dienen zum Beispiel der Übertragung von Daten zwischen der Mastersteuerung A und den weiteren Steuermodulen oder zwischen den Steuermodulen untereinander.

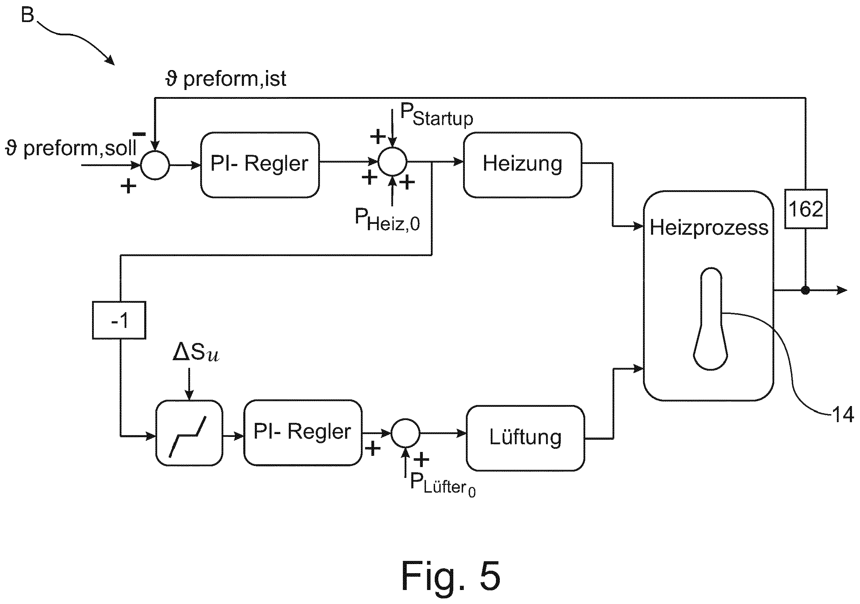

Figur 5 zeigt den schematischen Aufbau einer Steuereinrichtung B für die Heizungsregelung, wobei als Führungswert die Oberflächentemperatur ϑ_{Preform,ist} eines Vorformlings gewählt ist. Die von dieser dargestellten Regelung geregelte Heizvorrichtung arbeitet mit Heizeinrichtungen und mit Kühleinrichtungen in Form eines Lüfters. Die Regelung erhält als Arbeitspunkte eine Startheizleistung P_{Heiz,0} und eine Startlüfterleistung P_{Lüfter,0}, da vorliegend zusätzlich zu Heizstrahlern eine Kühlung der Vorformlingsoberfläche vorgesehen ist. Die Regelung der Heizung soll dabei anhand der Messung einer Oberflächentemperatur der Vorformlinge 14 erfolgen, und zu diesem Zwecke ist, wie zu Figur 1 erläutert, am Ende der Heizstrecke ein Pyrometer 162 angeordnet. Anhand der mit dem Pyrometer 162 gemessenen Oberflächentemperatur ϑ_{Preform,ist} der Vorformlinge 14 führt die Regelung die Heizleistung nach. Weiterhin kann vorgesehen sein, dass eine Umgebungstemperatur erfasst wird und auch diese Umgebungstemperatur in die Regelung der Heizvorrichtung einfließt. Es ist im dargestellten Ausführungsbeispiel vorgesehen, dass ein Absinken der Heizleistung erfasst wird. Um ein zu starkes Absinken der Heizleistung zu verhindern wird bei Unterschreiten der Leistung ΔSu die Leistung der Oberflächenkühlung durch die Lüftung verändert. Bei Absinken der Heizleistung wird zum Beispiel die Leistung der Oberflächenkühlung so lange erhöht, bis der Heizungsregler ein Absinken der Oberflächentemperatur der Vorformlinge feststellt und die Heizleistung wieder erhöht.

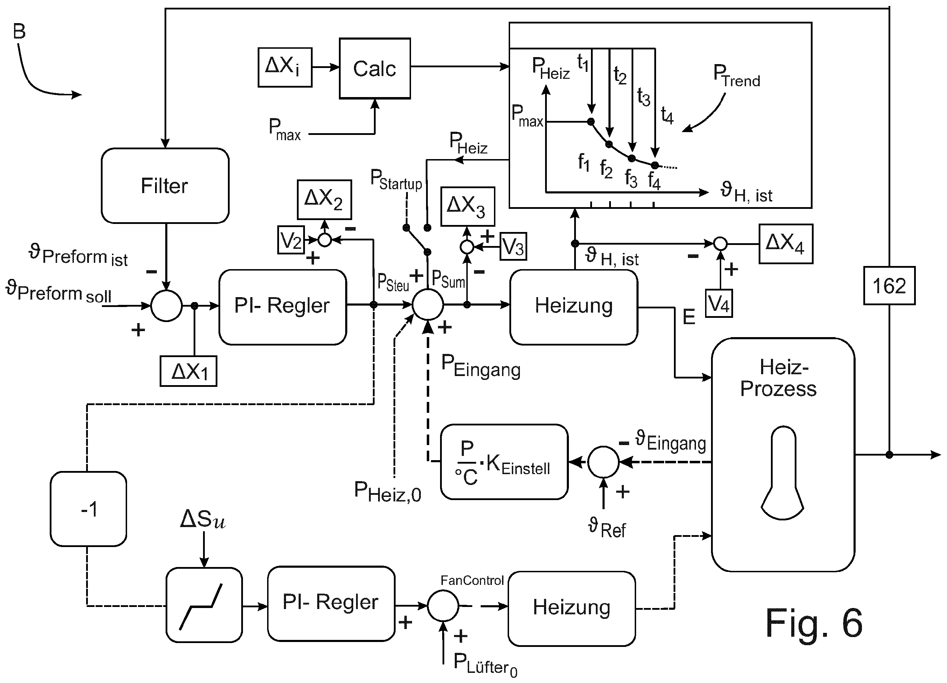

Figur 6 zeigt ein Regelungsschema für die Regelung einer Heizvorrichtung, wie beispielsweise im Grundprinzip in der Figur 5 gezeigt. Die Figur 6 veranschaulicht dabei, wie eine Sollwertkennlinie im zweiten Betriebszustand erfasst wird. Die Steuereinrichtung B weist einen Regler, beispielsweise einen PI-Regler, auf. Als Führungsgröße wird dem Regler die Oberflächentemperatur-Istwert ϑ_{Preform,ist} der Vorformlinge zugeführt, der beispielsweise mit dem Temperatursensor 162 bzw. Pyrometer gemessen wird. Die Oberflächentemperatur ϑ_{Preform,ist} des Vorformlings wird vorzugsweise mit einem Filter gefiltert. Als Sollwert wird dem Regler der Oberflächentemperatur-Sollwert ϑ_{Preform,soll} des Vorformlings vorgegeben.

Die Regeldifferenz aus ϑ_{Preform,soll} und ϑ_{Preform,ist} geht in den Regler ein. Die Regeldifferenz ist auch als Regelabweichung bekannt. Basierend auf der Regeldifferenz erzeugt der Regler eine Stellgröße P_{Steu} die in die Regelstrecke eingegeben wird, die als Heizung und Heizprozessspross dargestellt ist.

Die Figur 6 veranschaulicht dabei, wie im zweiten Betriebszustand eine Sollwertkennlinie P_{Trend} zur künftigen Ansteuerung der Heizvorrichtung 116 erstellt wird. Es werden Stützstellen f₁ bis f₄ der Sollwertkennlinie P_{Trend} zu vorbestimmten Zeitpunkten t₁ bis t₄ in Abhängigkeit einer erfassten Abweichung Δxᵢ zwischen einem Referenzwert und einem Regelungsistwert einer Regelgröße ermittelt. In der Figur 6 sind dabei vier verschiedene erfasste Abweichungen Δx₁ bis Δx₄ dargestellt, die in den Block CALC eingehen. Die erfassten Abweichungen Δx₁ bis Δx₄ werden als Δxᵢ abgekürzt. In dem CALC Block, der eine Berechnungseinheit der Steuereinheit veranschaulicht, ist eine Funktion oder ein Algorithmus hinterlegt, um die Funktionswerte in Abhängigkeit der erfassten Abweichungen Δxᵢ zu erstellen.

Die erfasste Abweichung Δx₁ ist eine Abweichung zwischen dem Temperatursollwert ϑ_{pre-form,soll} eines Vorformlings und dem gemessenen Temperaturistwert ϑ_{preform,ist} eines Vorformlings 14, wobei der gemessene Temperaturistwert mit einem Temperatursensor 162 am Ende der thermischen Konditionierung des Vorformlings 14 erfasst wird. Der Temperatursollwert ϑ_{preform,soll} ist ein Temperatursollwert eines Vorformlings 14 am Ende der thermischen Konditionierung. In diesem Fall entspricht die erfasste Abweichung Δx₁, also der Regelabweichung bzw. der Regeldifferenz eines Reglers der Heizvorrichtung 116. Der Referenzwert ist also ein Temperatursollwert und der Regelungsistwert entspricht einem Temperaturistwert.

Die erfasste Abweichung Δx₂ ist eine Abweichung zwischen einem Vergleichswert V₂ und einer Steuergröße P_{Steu} eines Reglers der Heizvorrichtung 116, wobei der Vergleichswert V₂ beispielsweise gleich null ist, um eine Abweichung der Steuergröße P_{Steu} zu null festzustellen. In diesem Beispiel entspricht die erfasste Abweichung Δx₂ also der Steuergrößenabweichung P_{Steu} des Reglers zu null. Der Referenzwert ist also ein vorgegebener Vergleichswert V₂ und der Regelungsistwert einer Regelgröße entspricht dem aktuellen Wert der Steuergröße P_{Steu}.

Die erfasste Abweichung Δx₃ ist eine Abweichung zwischen einem Vergleichswert V₃ und einer Summensteuergröße P_{Sum} zur Ansteuerung des Heizvorrichtung 116, wobei die Summensteuergröße aus einer Steuergröße P_{Steu} eines Reglers der Heizvorrichtung 116 und wenigstens einer erfassten Störgröße P_{Startup}, P_{Eingang}, P_{Heiz,0} ausgebildet ist, wobei vorzugsweise der Vergleichswert V₃ gleich null ist, um eine Abweichung der Summensteuergröße P_{Sum} zu null festzustellen. In diesem Beispiel entspricht die erfasste Abweichung Δx3, also der Abweichung der Summensteuergröße P_{Sum} des Reglers zu null. Der Referenzwert ist also ein vorgegebener Vergleichswert V₃ und der Regelungsistwert einer Regelgröße entspricht dem aktuellen Wert der Summensteuergröße P_{Sum}.

Die erfasste Abweichung Δx₄ ist eine Abweichung zwischen einem Vergleichswert V₄ und einem gemessenen Temperaturistwert ϑ_{H,ist} der Heizvorrichtung 116, wobei vorzugsweise der Vergleichswert V₄ ein Temperatursollwert ϑ_{H,soll} der Heizvorrichtung 116 ist. In diesem Beispiel entspricht die erfasste Abweichung Δx₄, also der Abweichung der gemessenen Temperaturistwert ϑ_{H,ist} des Reglers zu dem Vergleichswert V₄. Der Referenzwert ist also ein vorgegebener Vergleichswert V₄ und der Regelungsistwert einer Regelgröße entspricht dem aktuellen Temperaturistwert ϑ_{H,ist}. Der Vergleichswert V₄ ist beispielsweise ein Temperatursollwert ϑ_{H,soll} der Heizvorrichtung 116.

Die vier vorstehenden erfassten Abweichungen Δx₁ bis Δx₄ bzw. Δxᵢ werden verwendet, um die Funktionswerte der Stützstellen zu f₁ bis f₄ zu bestimmen. Zur Bestimmung der Sollwertkennlinie kann dabei zusätzlich eine maximale Ansteuerleistung Pₘₐₓ berücksichtigt werden.

Die Figur 6 zeigt zudem, dass die Sollwertkennlinie P_{Trend} eine Heizleistungssollwertkennlinie zur Ansteuerung der Heizvorrichtung 116 ist, da in dem gezeigten Diagramm eine Heizleistung P_{Heiz} ausgegeben wird, die als Störgröße aufgeschaltet wird.

Das Ermitteln der Stützstellen wird dabei so ausgeführt, dass ein Funktionswert fᵢ(tᵢ) einer Stützstelle mit sinkender Abweichung Δxi absinkt. Wie zu erkennen ist, nimmt der Verlauf ausgegebene Heizleistung P_{Heiz} mit zunehmendem Temperaturistwert ϑ_{H,ist} ab.

Die vorbestimmten Zeitpunkte sind in dem gezeigten Ausführungsbeispiel fest vorgegebene Zeitpunkte.

Die dargestellten weiteren Teile des Blockdiagramms veranschaulichen weitere Störgrößen, die in der Steuereinheit vorzugsweise berücksichtigt werden, wie zum Beispiel die Startheizleistung P_{Heiz,0}, die Startup-Heizleistung P_{Startup}, die Zusatzleistung P_{Eingang}, um unterschiedliche Eingangstemperaturen ϑ_{Eingang} der Vorformlinge auszugleichen. ϑ_{Ref} bezeichnet eine Referenztemperatur der Vorformlinge am Eingang der thermischen Konditionierung.

Der untere gezeigte gestrichelte Regelkreis entspricht dabei einer parallelen Regelung einer Lüftung der Heizvorrichtung 116. Es ist also zusätzlich zu Heizstrahlern eine Kühlung der Vorformlingsoberfläche vorgesehen, wie beispielsweise zur Figur 5 beschrieben.

### Bezugszeichen

- 10: Umformmaschine
- 12: Behälter
- 14: Vorformlinge
- 16: Umformstationen
- 22: Mündungsabschnitt
- 110: Arbeitsrad
- 112: Zuführeinrichtung
- 114: Übergaberad
- 116: Heizvorrichtung
- 118: Heizeinrichtung
- 120: Transporteinrichtung
- 122: Übergaberad
- 124: Entnahmerad
- 126: Ausgabestrecke
- 128: Eingabeeinrichtung
- 130: Verschlusskappen
- 132: Abschotteinrichtung
- 160: Temperatursensor
- 162: Temperatursensor, insbesondere Pyrometer
- 164: Wanddickenmesssensor
- 202: Klemmdorn
- 203: Handhabungseinrichtung
- 205: Stützringabschirmung
- 207: Gegenreflektor
- 209: Nahinfrarot-Strahler
- 211: Heiztunnel
- 212: Bodenreflektor
- 301: Bodenbereich
- 302: Mündungsabschnitt
- 303: Außengewinde
- 304: Stützring
- 305: Wandbereich
- 400: Steuereinrichtung
- 401: Display
- 402, 403, 404: Datenleitungen
- 405: Verbindungsleitung
- A: Mastersteuerung
- B: Steuereinrichtung für die Heizvorrichtung
- C: Steuerung für den Antrieb
- D: Sicherheitseinrichtung
- E: Steuerungseinrichtung für den Umformprozess

## Patentansprüche

1. Verfahren zum Betreiben einer Heizvorrichtung (116) für die Temperaturkonditionierung von Vorformlingen (14) aus einem thermoplastischen Material in der Heizvorrichtung (116), wobei der jeweilige Vorformling (14) durch die thermische Konditionierung in der Heizvorrichtung (116) auf einen nachfolgenden Umformungsvorgang vorbereitet wird, bei dem mit einem unter einem Druck in den Vorformling (14) zugeführten Umformfluid der Vorformling (14) in einen Behälter (12) umgeformt wird, wobei die Heizvorrichtung (116) in mehreren Betriebszuständen betrieben wird, nämlich wenigstens in einem ersten und in einem zweiten Betriebszustand, wobei der Betrieb der Heizvorrichtung (116) im zweiten Betriebszustand für eine Startupphase der Heizvorrichtung (116) erfolgt, in der sich eine Temperatur der Heizvorrichtung (116) einer Gleichgewichtstemperatur eines thermodynamisch stabilen Gleichgewichtszustandes der Heizvorrichtung (116) annähert, wobei der Betrieb der Heizvorrichtung (116) im ersten Betriebszustand erfolgt für einen sich an die Startupphase anschließenden Dauerbetrieb der Heizvorrichtung (116), **dadurch gekennzeichnet, dass** im zweiten Betriebszustand eine Sollwertkennlinie (P_{Trend}) zur künftigen Ansteuerung der Heizvorrichtung (116) erstellt wird, indem Stützstellen der Sollwertkennlinie zu vorbestimmten Zeitpunkten in Abhängigkeit einer erfassten Abweichung (Δxᵢ) zwischen einem Referenzwert und einem Regelungsistwert einer Regelgröße ermittelt werden.

2. Verfahren nach Anspruch 1, wobei die Sollwertkennlinie eine Heizleistungssollwertkennlinie (P_{Trend}) zur Ansteuerung der Heizvorrichtung (116) ist, und vorzugsweise mit der Heizleistungssollwertkennlinie in Abhängigkeit eines gemessenen Temperaturistwerts (ϑ_{H,ist}) der Heizvorrichtung ein Heizleistungssollwert (P_{Heattrend}) zur Ansteuerung der Heizvorrichtung erzeugt wird.

3. Verfahren nach Anspruch 1 oder 2, wobei das Ermitteln der Stützstellen so ausgeführt wird, dass ein Funktionswert einer Stützstelle mit sinkender Abweichung (Δxᵢ) absinkt.

4. Verfahren nach einem der vorstehenden Ansprüche, wobei die künftige Ansteuerung eine Ansteuerung der Heizvorrichtung im ersten Betriebszustand mit der Sollwertkennlinie ist, nachdem die Sollwertkennlinie ermittelt wurde, und/oder die künftige Ansteuerung eine Ansteuerung der Heizvorrichtung in einem zweiten Betriebszustand mit der Sollwertkennlinie ist, nachdem die Sollwertkennlinie erstellt wurde.

5. Verfahren nach einem der vorstehenden Ansprüche, wobei die vorbestimmten Zeitpunkte
- fest vorgegebene Zeitpunkte sind, und/oder
- temperaturabhängige Zeitpunkte sind, die zu vorbestimmten und erfassten Temperaturwerten des Vorformlings (14) vorliegen oder die zu vorbestimmten und erfassten Temperaturwerten der Heizvorrichtung (116) im zweiten Betriebszustand vorliegen.

6. Verfahren nach einem der vorstehenden Ansprüche, wobei die erfassten Stützstellen als Trendkurve interpoliert werden, insbesondere linear oder quadratisch interpoliert werden.

7. Verfahren nach einem der vorstehenden Ansprüche, wobei die erstellte Sollwertkennlinie oder die interpolierte Trendkurve an einer Anzeige der Heizvorrichtung (116) angezeigt wird.

8. Verfahren nach einem der vorstehenden Ansprüche, wobei die erstellte Sollwertkennlinie in einer Speichereinheit der Heizvorrichtung (116) und/oder in einem Onlinespeicher und/oder in einer Speichereinheit einer Umformmaschine nach Erstellung gespeichert wird und aufrufbar zur künftigen Ansteuerung der Heizvorrichtung (116) hinterlegt wird.

9. Verfahren nach einem der vorstehenden Ansprüche, wobei die bestimmten Stützstellen manuell veränderlich in einer Speichereinheit der Heizvorrichtung (116) hinterlegt werden und über eine Eingabeschnittstelle der Heizvorrichtung individuell anpassbar hinterlegt werden.

10. Verfahren nach einem der vorstehenden Ansprüche, wobei die erfasste Abweichung (Δxᵢ) eine Abweichung (Δx₁) zwischen einem Temperatursollwert (ϑ_{preform,soll}) eines Vorformlings (14) und einem gemessenen Temperaturistwert (ϑ_{preform,ist}) eines Vorformlings (14) ist, wobei vorzugsweise der gemessene Temperaturistwert mit einem Temperatursensor am Ende der thermischen Konditionierung des Vorformlings (14) erfasst wird, und der Temperatursollwert ein Temperatursollwert eines Vorformlings (14) am Ende der thermischen Konditionierung ist.

11. Verfahren nach einem der vorstehenden Ansprüche, wobei die erfasste Abweichung (Δxᵢ) eine Abweichung (Δx₂) zwischen einem Vergleichswert (V₂) und einer Steuergröße (P_{Steu}) eines Reglers der Heizvorrichtung (116) ist, wobei vorzugsweise der Vergleichswert (V₂) gleich null ist, um eine Abweichung der Steuergröße (P_{Steu}) zu null festzustellen.

12. Verfahren nach einem der vorstehenden Ansprüche, wobei die erfasste Abweichung (Δxᵢ) eine Abweichung (Δx₃) zwischen einem Vergleichswert (V₃) und einer Summensteuergröße (P_{Sum}) zur Ansteuerung des Heizvorrichtung (116) ist, wobei die Summensteuergröße aus einer Steuergröße (P_{Steu}) eines Reglers der Heizvorrichtung (116) und wenigstens einer erfassten Störgröße ausgebildet ist, wobei vorzugsweise der Vergleichswert gleich null ist, um eine Abweichung der Summensteuergröße (P_{Sum}) zu null festzustellen.

13. Verfahren nach einem der vorstehenden Ansprüche, wobei die erfasste Abweichung (Δxᵢ) eine Abweichung (Δx₄) zwischen einem Vergleichswert (V₄) und einem gemessenen Temperaturistwert (ϑ_{H,ist}) der Heizvorrichtung (116) ist, wobei vorzugsweise der Vergleichswert (V₄) ein Temperatursollwert (ϑ_{H,soll}) der Heizvorrichtung (116) ist.

## Claims

1. The method for operating a heating device (116) for the temperature conditioning of preforms (14) of a thermoplastic material in the heating device (116), wherein the respective preform (14) is prepared by thermal conditioning in the heating device (116) for a subsequent forming process, wherein the preform (14) is formed into a container (12) by means of a forming fluid fed into the preform (14) under pressure, wherein the heating device (116) is operated in a plurality of operating states, namely at least in a first and in a second operating state, wherein the heating device (116) is operated in the second operating state for a start-up phase of the heating device (116) in which a temperature of the heating device (116) approaches an equilibrium temperature of a thermodynamically stable equilibrium state of the heating device (116), wherein the operation of the heating device (116) takes place in the first operating state for continuous operation of the heating device (116) following the start-up phase, **characterized in that,** in the second operating state, a setpoint characteristic curve (P_{Trend}) is created for the future control of the heating device (116) by determining support points of the setpoint characteristic curve at predetermined points in time depending on a recorded deviation (Δxᵢ) between a reference value and a control actual value of a control variable.

2. The method according to Claim 1, wherein the setpoint characteristic curve is a heating power setpoint characteristic (P_{Trend}) for controlling the heating device (116), and preferably, along with the heating power setpoint characteristic curve, a heating power setpoint (P_{Heattrend}) is generated for the control of the heating device depending on a measured temperature actual value (ϑ_{H,actual}) of the heating device.

3. The method according to Claim 1 or 2, wherein the determination of the support points is carried out in such a way that a function value of a support point decreases with decreasing deviation (Δ_{Xi}).

4. The method according to any one of the preceding claims, wherein the future control is a control of the heating device in the first operating state with the setpoint characteristic curve after the setpoint characteristic curve has been determined, and/or the future control is a control of the heating device in a second operating state with the setpoint characteristic curve after the setpoint characteristic curve has been established.

5. The method according to any of the preceding claims, wherein the predetermined points in time
- are fixed points in time, and/or
- are temperature-dependent points in time which are present at predetermined and detected temperature values of the preform (14) or which are present at predetermined and recorded temperature values of the heating device (116) in the second operating state.

6. The method according to any one of the preceding claims, wherein the detected support points are interpolated as a trend curve, in particular, linearly or quadratically interpolated.

7. The method according to any one of the preceding claims, wherein the established setpoint characteristic curve or the interpolated trend curve is indicated on a display of the heating device (116).

8. The method according to any one of the preceding claims, wherein the established setpoint characteristic curve is stored in a memory unit of the heating device (116) and/or in an online memory and/or in a memory unit of a forming machine after creation and is stored in a retrievable manner for future control of the heating device (116).

9. The method according to any one of the preceding claims, wherein the specific support points are manually stored in a memory unit of the heating device (116) in a manually variable manner and are stored in an individually adaptable manner via an input interface of the heating device.

10. The method according to any one of the preceding claims, wherein the detected deviation (Δ_{Xi}) is a deviation (Δ_{X1}) between a temperature setpoint (ϑ_{preform,setpoint}) of a preform (14) and a measured actual temperature value (ϑ_{preform,actual}) of a preform (14), wherein, preferably, the measured actual temperature value is detected by a temperature sensor at the end of the thermal conditioning of the preform (14), and the temperature setpoint is a temperature set-point of a preform (14) at the end of the thermal conditioning.

11. The method according to any one of the preceding claims, wherein the deviation (Δ_{Xi}) covered is a deviation (Δ_{X2}) between a reference value (V₂) and a control variable (P_{control}) of a controller of the heating device (116), wherein, preferably, the reference value (V₂) is equal to zero in order to establish a deviation of the control variable (P_{Control}) from zero.

12. The method according to any one of the preceding claims, wherein the measured deviation (Δ_{Xi}) is a deviation (ΔX₃) between a reference value (V₃) and a total control variable (P_{Sum}) for controlling the heating device (116), wherein the total control variable is formed from a control variable (P_{Control}) of a controller of the heating device (116) and at least one recorded disturbance variable, wherein, preferably, the reference value is equal to zero in order to determine a deviation of the total control variable (P_{Sum}) from zero.

13. The method according to any one of the preceding claims, wherein the deviation (Δ_{Xi}) is a deviation (Δ_{X4}) between a reference value (V4) and a measured actual temperature value (ϑ_{H,actual}) of the heating device (116), wherein preferably the reference value (V4) is a temperature set-point (ϑ_{H,setpoint}) of the heating device (116).

## Revendications

1. Procédé de commande d'un dispositif de chauffage (116) pour le conditionnement thermique de préformes (14) en un matériau thermoplastique dans le dispositif de chauffage (116), la préforme (14) étant respectivement préparée par le conditionnement thermique dans le dispositif de chauffage (116) à un processus de formage suivant dans le cadre duquel la préforme (14) est transformée en un récipient (12) à l'aide d'un fluide de formage introduit sous pression dans la préforme (14), le dispositif de chauffage (116) opérant selon plusieurs états de fonctionnement, à savoir au moins un premier et un second état de fonctionnement, le fonctionnement du dispositif de chauffage (116) selon le second état étant destiné à une phase de démarrage du dispositif de chauffage (116) au cours de laquelle une température du dispositif de chauffage (116) s'approche d'une température d'équilibre d'un état d'équilibre thermodynamique stable du dispositif de chauffage (116), le fonctionnement du dispositif de chauffage (116) selon le premier état étant destiné à service continu du dispositif de chauffage (116) qui suit la phase de démarrage, **caractérisé en ce que,** dans un second état de fonctionnement, une caractéristique de valeur de consigne (P_{Trend}) destinée à commander ultérieurement le dispositif de chauffage (116) est établie en déterminant à des instants déterminés des points de référence de la caractéristique de valeur de consigne en fonction d'une divergence (Δxᵢ) détectée entre une valeur de référence et une valeur de régulation effective d'une grandeur de réglage.

2. Procédé selon la revendication 1, la caractéristique de valeur de consigne étant une caractéristique de puissances de chauffage de consigne (P_{Trend}) pour la commande du dispositif de chauffage (116) et une puissances de chauffage de consigne (P_{Heattrend}) pour la commande du dispositif de chauffage étant de préférence générée avec la caractéristique de puissances de chauffage de consigne en fonction d'une température effective (ϑ_{H,ist}) du dispositif de chauffage mesurée.

3. Procédé selon la revendication 1 ou 2, les points de référence étant déterminés de façon à ce qu'une valeur de fonction d'un point de référence dont la divergence (Δxᵢ) baisse diminue.

4. Procédé selon l'une des revendications précédentes, la commande ultérieure étant une commande du dispositif de chauffage dans le premier état de fonctionnement avec la caractéristique de valeur de consigne après que cette caractéristique de valeur de consigne ait été déterminée, et/ou la commande ultérieure étant une commande du dispositif de chauffage dans un second état de fonctionnement avec la caractéristique de valeur de consigne après que cette caractéristique de valeur de consigne ait été déterminée.

5. Procédé selon l'une des revendications précédentes, les instants déterminés
- étant des instants prédéfinis et/ou
- des instants dépendant de températures auxquels sont données et saisies des températures de la préforme (14) ou auxquels sont données et saisies des températures du dispositif de chauffage (116) dans le second état de fonctionnement.

6. Procédé selon l'une des revendications précédentes, les points de référence saisis étant interpolés comme courbe de tendance, notamment par interpolation linéaire ou quadratique.

7. Procédé selon l'une des revendications précédentes, la caractéristique de valeur de consigne établie ou la courbe de tendance interpolée est affichée par un affichage du dispositif de chauffage (116).

8. Procédé selon l'une des revendications précédentes, la caractéristique de valeur de consigne établie étant sauvegardée dans une unité de mémoire du dispositif de chauffage (116) et/ou dans une mémoire en ligne et/ou dans une unité de mémoire d'une machine de formage, et pouvant être rappelée pour être appliquée à une commande ultérieure du dispositif de chauffage (116).

9. Procédé selon l'une des revendications précédentes, les points de référence déterminés pouvant être modifiés manuellement et enregistrés dans une unité de mémoire du dispositif de chauffage (116) après avoir été individuellement adaptés au moyen d'une interface d'entrée du dispositif de chauffage.

10. Procédé selon l'une des revendications précédentes, la divergence (Δxᵢ) saisie étant une différence (Δx₁) entre une température de consigne (ϑ_{preform,soll}) d'une préforme (14) et une température effective (ϑ_{preform,ist}) mesurée d'une préforme (14), la température effective étant de préférence saisie par un capteur de température à l'issue du conditionnement thermique de la préforme (14) et la température de consigne étant une température de consigne d'une préforme (14) à l'issue du conditionnement thermique.

11. Procédé selon l'une des revendications précédentes, la divergence (Δxᵢ) saisie étant une différence (Δx₂ entre une valeur comparative (V₂) et une grandeur de commande (Pₛₜₑᵤ) d'un régulateur du dispositif de chauffage (116), la valeur comparative (V₂) étant de préférence égale à zéro pour constater une divergence de la grandeur de commande (Pₛₜₑᵤ) par rapport à zéro.

12. Procédé selon l'une des revendications précédentes, la divergence (Δxᵢ) saisie étant une différence (Δx₃ entre une valeur comparative (V₃) et une grandeur de commande totalisée (Pₛᵤₘ) pour la commande du dispositif de chauffage (116), la grandeur de commande totalisée étant constituée d'une grandeur de commande (Pₛₜₑᵤ) d'un régulateur du dispositif de chauffage (116) et d'au moins une grandeur perturbatrice saisie, la valeur comparative étant de préférence égale à zéro pour constater une divergence de la grandeur de commande totalisée (Pₛᵤₘ) par rapport à zéro.

13. Procédé selon l'une des revendications précédentes, la divergence (Δxᵢ) saisie étant une différence (Δx₄ entre une valeur comparative (V₄) et une température effective (ϑ_{H,ist}) mesurée du dispositif de chauffage (116), la valeur comparative (V₄) étant de préférence une température de consigne (ϑ_{H.soll}) du dispositif de chauffage (116).
